# EUROPÄISCHE PATENTANMELDUNG

(11) **EP 1 386 535 A2**
(43) Veröffentlichungstag der Anmeldung: **04.02.2004**
(21) Anmeldenummer: 03405556.6
(22) Anmeldetag: 22.07.2003
(51) Int. Cl.: A01G 9/00

(54) **Kultivierungs- und Pflanzenträgersystem**

(30) Priorität: 23.07.2002 CH 12922002
(71) Anmelder: Oekag Wassertechnik (Schweiz) AG, 6005 Luzern (CH)
(72) Erfinder: Morandini, Giorgio, 6005 Luzern (CH); Morandini, Katja, 6005 Luzern (CH)
(74) Vertreter: Gachnang, Hans Rudolf

(57) **Zusammenfassung**

Das Kultivierungs- und Pflanzenträgersystem (9) ermöglicht die Kultivierung bzw. Rekultivierung von künstlich angelegten Ufern, erodierten Uferpartien oder Aufschüttungen unter Wasser. Dabei kann das Ufer- oder Aufschüttungsprofil in geeigneter Weise an die natürliche Ufergestalt angepasst werden. Bei Ufermauern kann durch eine geeignete Profilierung des Gewässergrundes am Fusse der Mauer deren Unterspülung verhindert werden.

## Beschreibung

Gegenstand der Erfindung ist ein Kultivierungs- und Pflanzenträgersystem gemäss Oberbegriff des Patentanspruchs 1.

Pflanzenträger für die Begrünung von erosionsgefährdeten Oberflächen, wie beispielsweise künstliche Böschungen entlang von Autobahnen oder nach Erdarbeiten in Gärten entlang von Terrassierungen sind in vielen Ausführungen bekannt. Sie umfassen meist ein Trägerelement, z.B. ein Netz aus verrottbaren Fasern, in das Pflanzensamen oder Jungpflanzen eingebracht worden sind. Nach dem Verlegen der Netze und teilweiser Überdeckung mit Humus spriessen die Pflanzensamen und die Wurzeln der Pflanzen wachsen in den Untergrund. Durch die Verankerung im Netz mindestens während einer vorgebbaren Zeit von einigen Monaten oder Jahren stellt sicher, dass durch Erosion, sei es durch starke Regengüsse oder auch übertretende Gewässer bei Uferverbauungen, die Pflanzen weggeschwemmt werden können.

Die Oberflächenbegrünung kann an den geeigneten Stellen auf diese Weise innert kurzer Zeit erfolgen.
Eine An- oder Wiederansiedelung von Pflanzen in stehenden oder fliessenden Gewässern ist mit solchen Netzen bisher nicht erfolgreich gewesen.

Eine mögliche Pflanzungsmethode ist aus der JP-A-11225598 bekannt, indem in Halm- oder Stengelbündel gehüllte wachstumsfähige Pflanzenteile mittels Nägeln oder dergleichen auf dem Grund von Gewässern befestigt werden. Diese Kultivierungsart lässt sich aber nur dort einsetzen, wo geringe Wasserstände vorhanden sind, so dass die Spitzen der Pflanzen die Wasseroberfläche überragen können. Aus der DE-U1-93 08 021.2 ist weiter ein Wasserpflanzen-Schwimmringsystem mit Schwebenetz für Unterwasserpflanzen bekannt. Die Wasserpflanzen sind dabei entweder in an der Oberfläche schwimmende Ringe oder an den Ringen hängenden sich unterhalb der Wasseroberfläche befindlichen Netzen gepflanzt. Diese Kultivierung eignet sich für ruhende Gewässer, wie Teiche, und es können auf diese Weise beispielsweise Seerosen oder bestimmte Unterwasserpflanzen in der Nähe der Wasseroberfläche kultiviert werden.
Für die Rekultivierung von erodierten Ufern entlang von Seen, Teichen oder Fliessgewässern oder als Erosionsschutz eignen sich die bekannten Vorrichtungen nicht.

Wie durch Untersuchungen nachgewiesen wurde (Hille S. und Siessegger B., Langenargen/Deutschland), spielt die Geometrie des Uferprofils und die Korngrösse des Ufermaterials eine zentrale Rolle beim Erosionsgeschehen. Durch nachhaltende Veränderung des Uferprofils können das ufer- und auch die pflanzenzerstörende Flächenerosion beeinflusst werden. Pflanzen, z.B. Rhizome, werden freigespült, verlieren den Halt und sterben ab.

Ein grosses Problem stellen auch Schlammsedimente dar. Durch bakterielle Tätigkeit bei der Schlammzersetzung wird Sauerstoff dem Wasser entzogen. Zudem lösen Bakterien auch biochemische Prozesse aus, welche Faulgase und Blähschlamm oder Rücklösungsvorgänge von Nährstoffen freisetzen. Um diese unerwünschten Vorgänge zu verhindern, muss der Schlamm von Zeit zu Zeit abgesaugt und einer Deponie zugeführt werden. Eine Ablagerung in anderen Bereichen des Gewässers ist nicht zulässig. Dies führt zu immensen Deponiekosten.

Eine Aufgabe der vorliegenden Erfindung besteht darin, ein Kultivierungs- und Pflanzenträgersystem zu schaffen, welches die Rekultivierung von erodierten Ufer- und Teichböschungen ermöglicht.
Eine weitere Aufgabe der Erfindung besteht darin, ein Kultivierungs- und Pflanzenträgersystem zu schaffen, welches die Kultivierung und Verfestigung von an anderer Stelle dem Gewässer entnommenen Schlämmen und Sedimenten dient und den Verbleib des Materials im Gewässer ermöglicht.
Eine weitere Aufgabe der Erfindung besteht darin, ein Kultivierungs- und insbesondere Pflanzenträgersystem zu schaffen, mit dem innerhalb von künstlich angelegten Wasserflächen, Teichen und Weihern in vorgebbarer Gestalt Pflanzenbereiche angelegt werden können.

Gelöst werden diese Aufgaben durch ein Kultivierungs- und Pflanzenträgersystem gemäss den Merkmalen des Patentanspruchs 1. Vorteilhafte Ausgestaltungen der Erfindung sind in den abhängigen Ansprüchen definiert.

Es gelingt durch die Kombination mindestens eines im wesentlichen biegesteifen oder starren Trägerelements und das mindestens eine Trägerelement in einem Abstand zum Ufer- oder Teichgrund haltende Ankerelemente eine Wiederbegrünung von Uferpartien, auch solche, die im wesentlichen keine organischen Stoffe mehr enthalten, sondern aus Kies oder Sand bestehen, zu schaffen. Durch die Hinterfüllung des Raums zwischen den Trägerelementen und dem Ufer- oder Teichgrund mit Schlick, Sedimenten und/oder Sand aus dem Gewässer kann eine erosionswiderstehende, von Wurzeln durchwachsene neue Böschung erstellt werden. Das Pflanzenträgersystem kann aber auch bei Teichanlagen auf öffentlichen Grundstücken oder im privaten Bereich als Kinderschutz eingesetzt werden, indem der Uferbereich über eine Breite von beispielsweise einem Meter mit dem Pflanzenträgersystem ausgerüstet wird, so dass ein in den Teich fallendes oder eintretendes Kind auf der Trägerkonstruktion zu liegen kommt und nicht ins Tiefwasser abrutschen oder absinken kann. Als Trägerelemente werden vorzugsweise Gitter oder steife Gewebe aber auch gelochte Platten aus Metall oder aus Kunststoff eingesetzt. Diese vorzugsweise inerten Stoffe belasten die Biologie des Gewässers bzw. des Ufergrundes nicht. Die als Ankerelemente dienenden Pfähle sind mit geringem Aufwand in den Ufergrund einramm- oder, falls sie mit einem Gewinde versehen sind, einschraubbar. Grosse Flächen können auch mittels Spannkabeln oder -seilen sicher auch gegen starken Wellenschlag gehalten werden, indem an den Rändern der so rekultivierten Flächen entsprechend massive Pfähle in den Grund gerammt werden (nicht dargestellt).
Mit dem erfindungsgemässen System können mit an anderer Stelle abgesaugtem Schlamm beispielsweise Inseln aufgeschüttet und danach bepflanzt und ingenieurbiologisch verfestigt werden. Vorzugsweise werden für die Verfestigung im Innern der Aufschüttungen quellende oder gelbildende Zusatzstoffe beigesetzt.
In vorteilhafter Weise lassen sich durch das Kultivierungs- und Pflanzenträgersystem auch bisher unbepflanzte oder nur teilweise bepflanzte künstliche Wasserbereiche in Parkanlagen oder in der Umgebung von Geschäftshäusern mit beliebigen, auch farbig gestaltbaren Pflanzenbereichen schmücken. Mit geeigneten Sperrmitteln, wie Kunststofffolien, können solche bepflanzte Bereiche bzw. deren Ränder auf Dauer begrenzt werden, um graphisch gestaltete Bereiche zu erhalten.
Für die Sanierung von dem Wellenschlag ausgesetzten Uferpartien können neben starren gespannten Konstruktionen auch solche mit schlaffen, auf den Ankerelementen aufliegende und an diesen befestigte Membranelemente eingesetzt werden.

Anhand verschiedener Ausführungsbeispiele wird die Erfindung näher erläutert. Es zeigen
- Figur 1: einen Querschnitt durch einen Uferbereich eines stehenden oder fliessenden Gewässers mit einer vorgelagerten Flachzone,
- Figur 2: einen Querschnitt durch den Uferbereich eines gemauerten Teichbeckens,
- Figur 3: eine Aufsicht auf ein Trägerelement (linke Seite ohne Bepflanzung, rechte Seite mit Bepflanzung),
- Figur 4: einen Querschnitt durch einen geneigten Uferbereich,
- Figur 5: einen Querschnitt durch einen Uferbereich mit Ufermauer,
- Figur 6: eine Seitenansicht eines Ankerelements mit an dessen oberen Ende befestigtem Trägerelement,
- Figur 7: eine Aufsicht auf das Trägerelement und das Ankerelement gemäss Figur 6,
- Figur 8: eine weitere Ausgestaltung einer Tragkonstruktion für ein Trägerelement mit Spannelementen,
- Figur 9: ein Detail eines Ankerelements in Figur 8 und
- Figur 10: ein Detail des Ankerelements in Figur 9,
- Figur 11: eine Aufsicht auf ein Gewässer, z.B. ein Teich, mit einer eine Insel bildenden Aufschüttung (Deponie),
- Figur 12: einen Längsschnitt durch den Teich längs Linie XII-XII in Figur 11,
- Figuren 13 - 15: geometrische Formen von Bepflanzungen in Ziergewässern,
- Figur 16: eine Aufsicht auf ein Bepflanzungssystem für Ziergewässer mit im Zentrum höher wachsenden Pflanzen und
- Figur 17: einen Querschnitt durch das Ziergewässer längs Linie XVII-XVII in Figur 16.

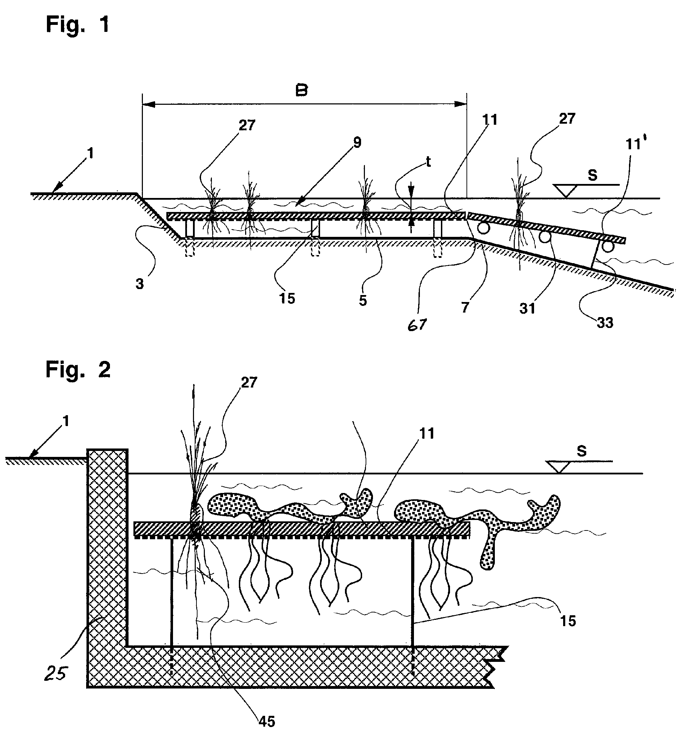

In der Querschnittsdarstellung gemäss Figur 1 ist mit Bezugszeichen 1 der trockene Uferbereich und mit Bezugszeichen 3 eine abfallende wasserbedeckte Uferböschung und mit Bezugszeichen 5 eine an die Uferböschung 3 anschliessende Flachwasserzone 5 dargestellt. An die Flachwasserzone 5 schliesst eine hier schwach geneigte Halde 7 an. Im vorliegenden Beispiel liegt der Wasserspiegel S etwa auf der Höhe des trockenen Ufers 1; dieser kann selbstverständlich auch tiefer liegen, wenn eine längere Trockenperiode vorausgegangen ist. Die Böschung 3 sowie die Flachwasserzone 5 erstrecken sich über eine Breite B vom Uferbereich 1 in das Gewässer. Es handelt sich hier um eine typische Anordnung eines Ufers, wie es beispielsweise in künstlich angelegten Teichen geschaffen wird oder in Seen vorkommt. Die Flachwasserzone 5 ist eine günstige Voraussetzung für das Gedeihen von Wasserpflanzen. Deren nachträgliche Kultivierung stellt aber einige Probleme dar, die durch das erfindungsgemässe Pflanzenträgersystem 9, das nachfolgend beschrieben wird, behoben werden können.

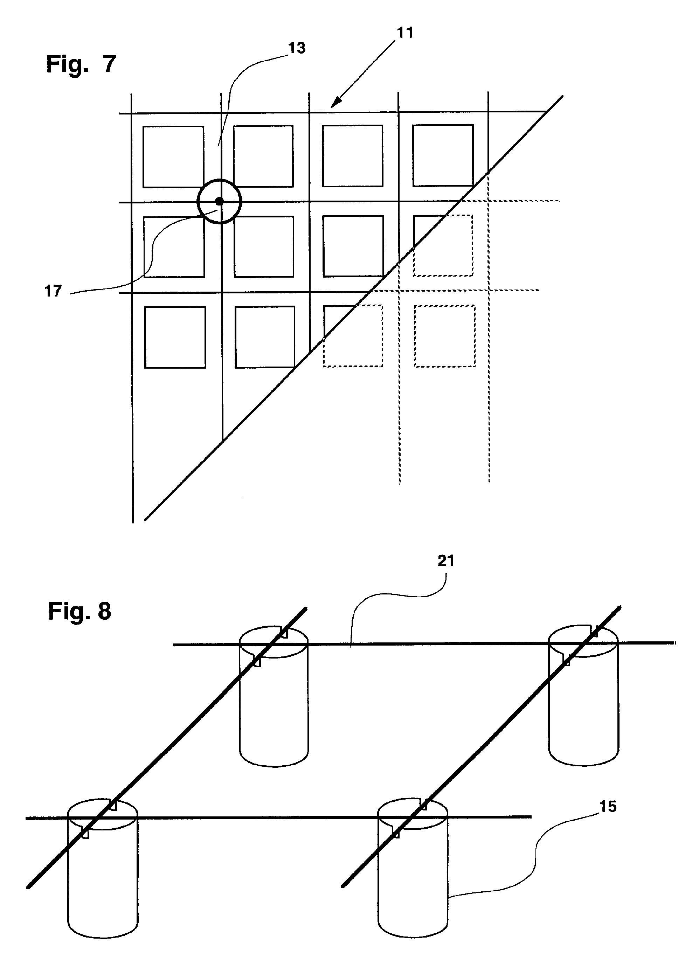

Das Pflanzenträgersystem 9 umfasst im Uferbereich 5 vorzugsweise horizontal angeordnete Trägerelemente 11, beispielsweise bedingt begehbare biegesteife Gitter, versteifte Gewebe oder gelochte Platten 13 (vgl. Figur 7), die in einem Abstand von t unter dem Wasserspiegel S fixiert sind. Im Uferbereich 1 erfolgt die Fixierung durch Ankerelemente 15, z.B. Pfähle, welche in den Teich- oder Flussgrund eingerammt oder eingeschraubt sind, letzteres falls am unteren Ende der Ankerelemente 15 ein Gewinde ausgebildet ist. Die Technik des Einrammens und des Einschraubens von Ankerelementen 15 ist Stand der Technik.

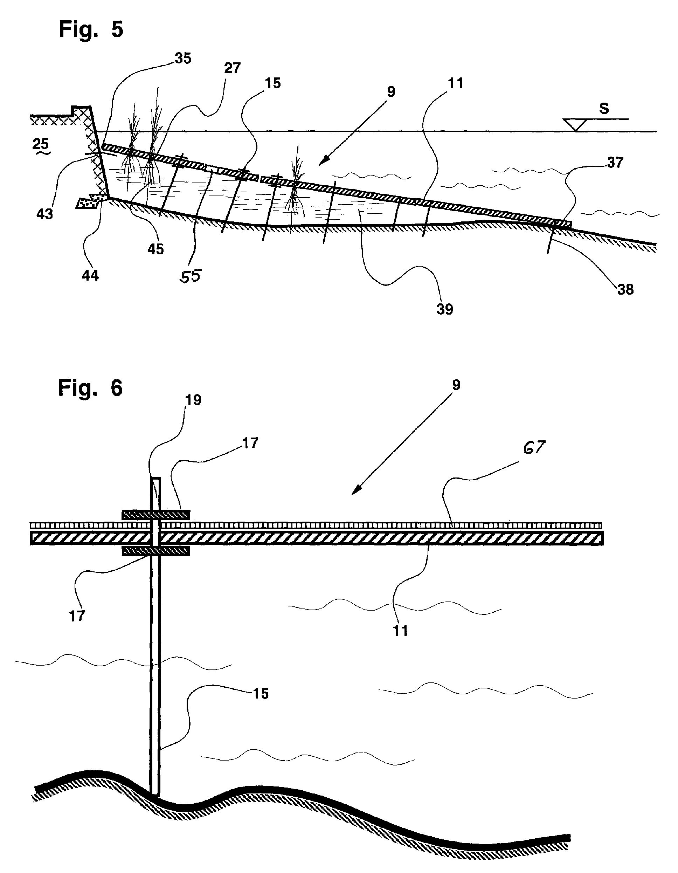

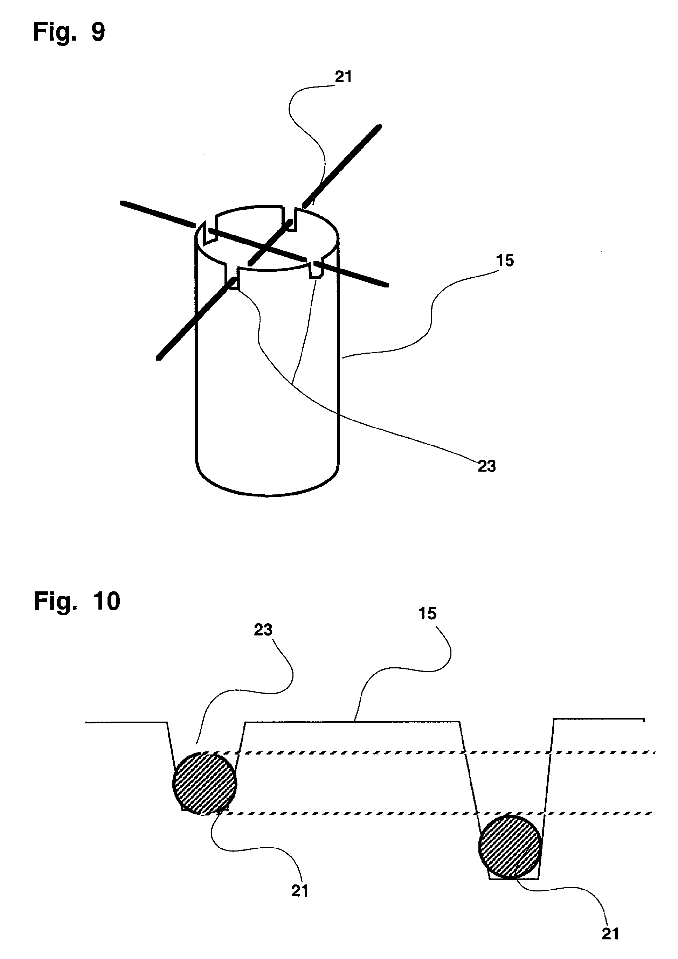

Am oberen Ende der Ankerelemente 15 sind die Trägerelemente 11 befestigt, beispielsweise mit zwei Platten 17, die auf einem Gewinde 19 gehalten werden (Figuren 6 und 7). Alternativ sind auch andere Befestigungsarten möglich, beispielsweise Spannkabel, Spannseile, Rohre oder Stangen 21, die in Schlitzen 23 am oberen Ende rohrförmiger Ankerelemente 15 gemäss den Figuren 8 bis 10 durch Kraft- oder Reibschluss gehalten sind. Die Spannseile 21 dienen dann als Auflage für die Trägerelemente 11. Deren Befestigung an den Spannkabeln oder -seilen 21 kann durch Eisenbinderdrähte oder Kabelbinder und dergleichen erfolgen.

Die Ankerelemente 15 dienen nicht nur der Verankerung der Trägerelemente 11 und der darauf kultivierten Pflanzen 27, sondern sie können auch von oben wirkende Lasten aufnehmen. Unfallverhütungsvorschriften schreiben beispielsweise vor, dass in auf öffentlich zugänglichen Grundstücken angelegten Teichen 2 über eine vorgegebene, als Schutzbereich dienende Breite B, beispielsweise B = 1 m, wenig unterhalb des Wasserspiegels, d.h. in einer Tiefe von beispielsweise t = 0,2 m, ein Einsinkschutz, z.B. Trägerelemente 11, angeordnet sein müssen, um beim Betreten eines Teiches durch Kleinkinder deren Eintauchen und Ertrinken im schlammigen Grund zu verhindern. Ausserhalb des Schutzbereiches B sind feste Auffangelemente nicht mehr erforderlich oder vorgeschrieben. Aus diesem Grund kann beispielsweise, wie in Figur 1 dargestellt, ein an das feste Trägerelement 11 anschliessendes, von geeigneten Schwimmkörpern 31 getragenes, nicht belastbares Trägerelement 11' treten. Damit die Trägerelemente 11' dort nicht an die Oberfläche aufsteigen, können diese mit Halteseilen 33 im Teichgrund verankert sein.
Figur 2 zeigt einen durch Trägerelemente 11 geschützten Uferbereich in einem gemauerten Teich ohne Böschung 3, jedoch mit einer vertikalen Mauer 25.

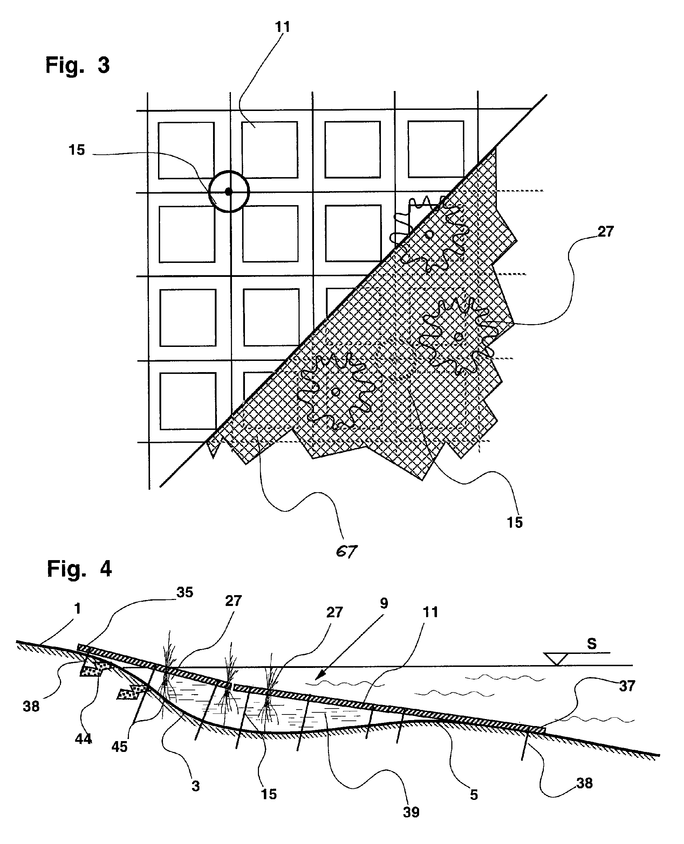

Das Pflanzenträgersystem 9 mit den gleichen Bauelementen, d.h. Trägerelementen 11 mit geeigneter Form und Ankerelementen 15, kann in vorteilhafter Weise für die Uferverbauung bzw. Kultivierung oder Rekultivierung eingesetzt werden. Zwei Beispiele solcher Uferprofilierungen und -bepflanzungen sind in den Figuren 4 und 5 dargestellt. Figur 4 zeigt ein flach abfallendes Ufer mit einem Böschungsbereich 3, an den die weiter abfallende Flachwasserzone 5 anschliesst. Solche Uferbereiche sind in Fliessgewässern oder in stehenden Gewässern mit Wellenschlag natürlicher oder menschlicher Herkunft (Schifffahrt, Wind) stets einer Erosion ausgesetzt. Durch frühere künstliche Eingriffe sind an solchen Ufern die Pflanzen meist ganz verschwunden und die Neu- oder Wiederanpflanzung mit den bekannten Mitteln (direktes Einpflanzen oder in Matten eingepflanzten Pflanzen) gestaltet sich schwierig. Das erfindungsgemässe Pflanzenträgersystem 9 ermöglicht hier eine sichere Neuanpflanzung, wenn die Trägerelemente 11 in der nachfolgend beschriebenen Weise eingesetzt werden. Im trockenen Uferbereich 1 oder geringfügig gewässerseitig davon beabstandet wird der obere Rand 35 der Trägerelemente 11 mit Befestigungselementen 38, z.B. langen Nägeln oder Heringen, direkt auf dem Untergrund verankert. Das gewässerseitige Ende 37 wird ebenfalls und in gleicher Weise mit Nägeln oder andern Verankerungsmitteln 38 am Grund des Gewässers verankert. Eine Verankerung der Kanten 35,37 (oben und unten) der Trägerelemente 11 könnte auch mit anderen Mitteln, wie Aufschüttung mit Grobkies oder Steinen, erfolgen. Zwischen den beiden Kanten 35 und 37 der Trägerelemente 11 wird dieses durch Ankerelemente 15 beabstandet vom Terrain 5 gehalten und das gewünschte neue Uferprofil vorgegeben. Der zwischen dem Teichgrund 5 und den Trägerelementen 11 entstehende Zwischenraum 39 kann durch Schlick und/oder anderes Material, wie Sand, Steine, aufgefüllt werden. Diese Auffüllmaterialien können im Pumpverfahren vom Gewässergrund entnommen und durch das Trägerelement 11 hindurch oder durch ein Loch 55 im Trägerelement 11 in den Zwischenraum 39 eingeführt werden.

In der Ausführung der Erfindung gemäss Figur 5 wird mittels des Pflanzenträgersystems 9 die weitere Unterhöhlung einer Ufermauer 25 gestoppt und/oder von Anfang an verhindert. Am Fuss der Ufermauer 25 ist mit Bezugszeichen 44 die Unterhöhlung dargestellt, welche die Standfestigkeit des Bauwerks über kurz oder lang vermindern wird. Das Pflanzenträgersystem 9 bzw. die obere Kante 35 des Trägerelements 11 ist durch geeignete Mittel, z.B. Ankerdübel 43, mit der Mauer 25 verbunden. Das untere Ende 37 ist wiederum mittels eines Verankerungsmittels 38 im Gewässergrund verankert. Zwischen den beiden Kanten 35,37 der Trägerelemente 11 sind wieder Ankerelemente 15 eingesetzt, die die Trägerelemente 11 in der gewünschten Lage, d.h. in derjenigen Lage halten, die später das neue Uferprofil darstellt. Auch hier wird der Zwischenraum 39 vorzugsweise mit Schlick, Kies und/oder Sand hinterfüllt. Das Füllmaterial kann dem Gewässer entnommen werden.

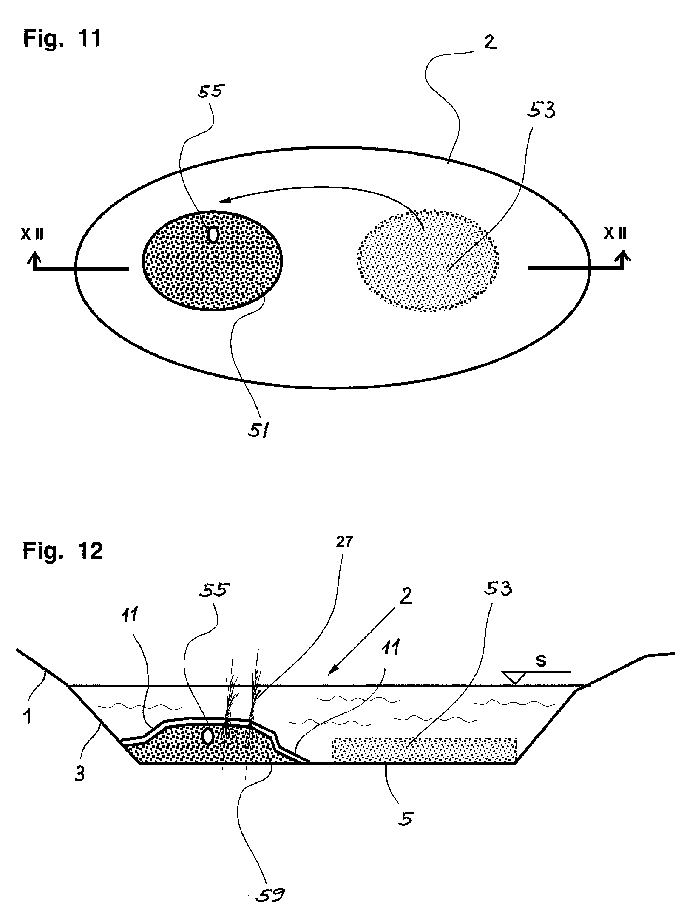

In der Ausgestaltung der Erfindung gemäss den Figuren 11 und 12 dient das Trägersystem 9 bzw. dienen dessen Trägerelemente 11 der Bildung von künstlichen Inseln 51, die aus verschlammtem Untergrund- und anderem Aushubmaterial 53 aufgeschüttet sind. Solches Material fällt u.a. bei der Ausbaggerung von Schifffahrtsrinnen in flachen Seen und Flüssen an. Abgepumptes Material 53, das durch den Pumpvorgang im Wasser feinst aufgelöst ist, hat selbst nicht die Fähigkeit, aufgeschüttet zu werden. Zudem werden die sedimentierten Stoffe feinst gelöst im Wasser verteilt und würden das gesamte Gewässer verunreinigen und trüben. Um die Insel 51 aus solchem Material aufbauen zu können, werden daher vorerst die Trägerelemente 11 derart zusammengefügt, dass sie die äussere Form und das Profil der zu erstellenden Insel 51 vorgeben. Durch die in Figur 12 nicht dargestellten Ankerelemente werden die Trägerelemente 11 in der gewünschten Lage gehalten. Nach dem Versetzen der Trägerelemente 11, welche bereits die Pflanzen 27 tragen, können durch die an der Oberseite angebrachte Öffnung 55 verschlammter Untergrund aber auch Kies 59 und allenfalls Zuschlagstoffe eingepumpt bzw. eingefüllt werden. Die auf den Trägerelementen 11 sitzenden Pflanzen 27 und deren dichtes Wurzelwerk 45 verhindern, dass aufgeschwemmte feine Stoffe aus dem verschlammten Untergrund ins benachbarte Gewässer gelangen können. Es erfolgt folglich eine Sedimentierung der neuen Schlammdeponie ausschliesslich unterhalb der Trägerelemente 11. Nach dem Abfluss des mitgepumpten Wassers tritt eine natürliche Verfestigung der letzteren ein.

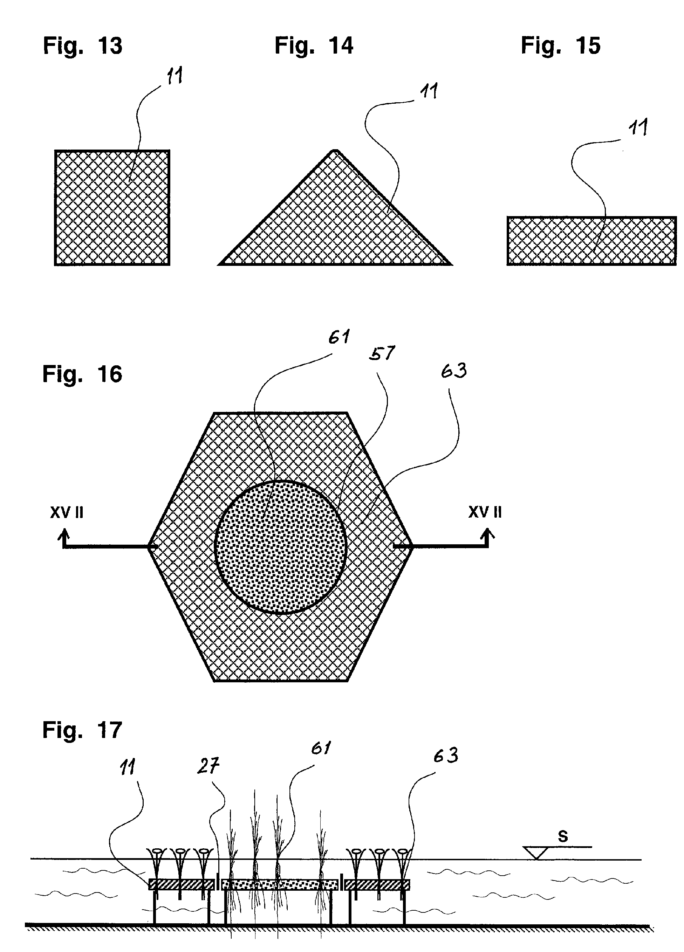

Eine weitere Anwendung der Trägerelemente 11 auf Ankerelementen 15 zeigen die Figuren 13 bis 17. Die Trägerelemente 11 dienen in diesem Ausführungsbeispiel als gestalterische Elemente in Parkteichen oder sonstigen Ziergewässern, insbesondere bei Repräsentationsbauten. Die Figuren 13 bis 15 zeigen einfache geometrische Formen (Quadrat, Dreieck und Rechteck); es können aber auch runde Formen (Figuren 16 und 17) oder beliebige andere Formen, beispielsweise Buchstaben oder Konturen von Firmenlogos Verwendung finden. Das in den Figuren 16 und 17 dargestellte kreisrunde Trägerelement 11 ist mit zwei unterschiedlichen Pflanzenarten bestückt. In der Mitte werden hochwachsende Pflanzen 61, z.B. blaue Iris, und im peripheren Kreisring niedrigwachsende Pflanzen 63, z.B. Binsen, von den Trägerelementen 11 getragen. Um eine gegenseitige überwucherung zu vermeiden, können an den Kontaktbereichen der hochwachsenden Pflanzen 61 und der niedrigwachsenden Pflanzen 63 Trennelemente 57, z.B. Kunststofffolien oder Platten, angeordnet sein. Die Trägerelemente 11 stehen wiederum in geeignetem Abstand zur Wasseroberfläche S auf Ankerelementen 15.

Die die Trägerelemente 11 bildenden Gitter oder Lochbleche 13 tragen die Pflanzen 27, deren Wurzelwerk 45 die Maschen der Gitter bzw. Löcher der Lochbleche beim Vorkultivieren durchwachsen haben. An der Unterseite liegt das Wurzelwerk 45 frei von einem Substrat. Die Bestückung der Trägerelemente 11 mit Pflanzen 27 erfolgt vor dem Versetzen in Gewässer an einem geeigneten Aufzuchtsort. Die Pflanzen 27 gedeihen dabei vorerst, d.h. bevor die Trägerelemente 11 in ein Gewässer eingebracht werden, auf statisch nicht relevanten Matten 67 aus Kokos, Sisal oder Jutefasern oder auch einem Kunststoff-Wirrgelege (vgl. Figur 6). Die Wurzeln 45 der Pflanzen 27 verwachsen dabei nicht nur mit der Auflage oder Matte 67, sondern untrennbar mit den als Unterlage dienenden Trägerlementen 11. Sobald die Trägerelemente 11 in ein Gewässer eingesetzt sind, ernähren sich die Pflanzen 27 von den dort vorhandenen Nährstoffen. Sind die Trägerelemente 11 zur Neuprofilierung eines Ufers oder zur Inselbildung eingesetzt und wird der Zwischenraum 39 zwischen den Trägerelementen 11 und der Uferböschung 3 oder dem Gewässergrund hinterfüllt, so wachsen die Wurzeln 45 der Pflanzen 27 in das im Zwischenraum 39 hinterfüllte Material 59 hinein und verfestigen dieses derart, dass eine Ausschwemmung durch Wellenschlag oder die Strömung vollständig verhindert werden kann und sich eine neue gewachsene Uferböschung oder Insel 59 bildet. Die als Anwachshilfe dienenden Matten 67 aus natürlichen oder künstlichen Fasern verrotten innerhalb weniger Jahre. Auch die Ankerelemente 15 können bei dieser Anwendung aus verrottbaren Materialien, z.B. Holz, hergestellt sein. Diese natürliche Bepflanzung garantiert auch in Zukunft die Festigkeit der Böschung.

## Patentansprüche

1. Kultivierungs- und Pflanzenträgersystem (9) für die Kultivierung oder Rekultivierung von Gewässer- und Teichufern sowie Aufschüttungen unter Wasser, umfassend ein Trägerelement (11) für die Verankerung von Wasser- und Sumpfpflanzen (27), **dadurch gekennzeichnet, dass** das Trägerlement (11) aus einem im wesentlichen formstabilen gitterartigen Flächengebilde besteht und durch Ankerelemente (15) in einem vorgebbaren Abstand (t) zur Gewässeroberfläche (S) oder zum Ufer- oder Teichgrund (3,5) getragen und gehalten wird.

2. Pflanzenträgersystem nach Anspruch 1, **dadurch gekennzeichnet, dass** das Trägerelement (11) ein biegesteifes Gitter, ein Gewebe oder eine gelochte Platte aus Metall oder Kunststoff ist und darauf vorkultivierte Pflanzen (27) trägt, die direkt auf dem Trägerelement (11) und/oder einer auf dem Trägerelement (11) aufliegenden Matte (67) verwachsen sind.

3. Pflanzenträgersystem nach einem der Ansprüche 1 oder 2, **dadurch gekennzeichnet, dass** die Ankerelemente (15) in den Gewässer- oder Teichgrund (3,5) ramm- oder einschraubbare Stangen aus Metall, Kunststoff oder einem verrottbaren Material sind, an deren oberen Enden Mittel (19,23) zum Befestigen des Trägerelements (11) ausgebildet sind.

4. Pflanzenträgersystem nach einem der Ansprüche 1 oder 3, **dadurch gekennzeichnet, dass** die Trägerelemente (11) direkt an den Ankerelementen (15) befestigt sind oder dass die Trägerelemente (11) auf an den Ankerelementen (15) befestigten Spannkabeln oder Spannseilen (21) abgestützt und gehalten sind.

5. Pflanzenträgersystem nach einem der Ansprüche 1 oder 4, **dadurch gekennzeichnet, dass** die Kanten (35,37) der Trägerelemente (11) parallel oder in einem spitzen Winkel zum Ufer- oder Teichprofil verlaufend versetzt und durch Befestigungsmittel (38) mit dem Gewässerboden verbunden sind.

6. Pflanzenträgersystem nach einem der Ansprüche 1 oder 5, **dadurch gekennzeichnet, dass** gewässerseitig an starr gehaltene Trägerelemente (11) ein schwimmendes Trägerelement (11') angelenkt ist, das durch Auftriebskörper (31) unter der Wasseroberfläche (S) in Schwebe gehalten wird.

7. Pflanzenträgersystem nach einem der Ansprüche 1 bis 4, **dadurch gekennzeichnet, dass** die Trägerelemente (11) als Gestaltungselemente mit besonderen geometrischen Formen, als Buchstaben oder Logo ausgebildet sind und Pflanzen (27) gleicher oder unterschiedlicher Höhe und Farbe tragen.

8. Pflanzenträgersystem nach einem der Ansprüche 1 bis 7, **dadurch gekennzeichnet, dass** die Pflanzen (27) auf den Trägerelementen (11) vor dem Versetzen der letzteren in ein Gewässer (2) mit diesen direkt und/oder einer darauf liegenden Matte (67) verwurzelt sind.

9. Pflanzenträgersystem nach einem der Ansprüche 1 bis 6 und 8, **dadurch gekennzeichnet, dass** mit mehreren miteinander verbundenen Trägerelementen (11) und mit die Trägerelemente (11) tragenden Ankerelemente (15) das Profil eines Ufers oder einer Insel erstellbar ist.
